# EUROPEAN PATENT SPECIFICATION

(11) **EP 1 270 622 B1**
(45) Date of publication and mention of the grant of the patent: **16.08.2006**
(21) Application number: 00917238.8
(22) Date of filing: 26.04.2000
(51) Int. Cl.: C08F 279/02, C08J 5/24

(54) **PROCEDURE FOR THE OBTAINMENT OF MODIFIED ACRYLIC SHEETS OF HIGH IMPACT RESISTANCE**
VERFAHREN ZUR HERSTELLUNG VON MODIFIZIERTEN ACRYLFOLIEN MIT HOHER SCHLAGZÄHIGKEIT
PROCEDE D'OBTENTION D'UNE FEUILLE ACRYLIQUE MODIFIEE A FORTE RESISTANCE AUX CHOCS

(30) Priority: 26.04.1999 MX 9903878
(43) Date of publication of application: 02.01.2003
(73) Proprietor: Plastiglas de Mexico, S.A. DE C.V., Frente a la estacion del F.F.C.C., Ocoyoacac, México 52740 (MX)
(72) Inventor: COLIN ESCOBAR, Sergio, Ocoyoacac, México 52740 (MX); AHUMADA ROMERO, Manuel, Ocoyoac, 52740 (MX); PENA ROSAS, Jose, Luis, Ocoyoacac, México 52740 (MX); LIMON RODRIGUEZ, Mariá Sonia, Ocoyoacac, México 52740 (MX); MILLE LOERA, Luis Enrique, Ocoyoacac, México 52740 (MX); VILCHIS RAMIREZ, Leopoldo, Ocoyoacac, México 52740 (MX)
(74) Representative: Durán Moya, Luis-Alfonso
(86) International application number: PCT/IB2000/000529
(87) International publication number: WO 2000/065554

(56) References cited:
- GB-A- 1 030 497
- GB-A- 1 302 069
- US-A- 4 287 317
- DATABASE WPI Section Ch, Week 199807 Derwent Publications Ltd., London, GB; Class A13, AN 1998-071896 XP002159516 & JP 09 309934 A (NIPPON STEEL CHEM CO), 2 December 1997 (1997-12-02)

## Description

This invention is related with the techniques to obtain a modified acrylic sheet highly resistant to impact as well as the procedure to obtain this sheet.

Acrylic sheets have been used for several years now for numerous applications requiring translucent or transparent materials, industrial or finished goods, as for the manufacturing of domes, molds for luminous advertisements, shelves for exhibiting products, office appliances, telephone booths, etc. Nevertheless, it is widely known that the generic acrylic sheets commonly used for such applications, have very little resistance to impact, therefore the goods manufactured with the latter are very fragile. Considering the above, polymeric compositions have been developed for some time now, which permit to obtain impact resistant sheets, which may be used for the aforementioned applications.

The majority of the compositions with impact resistant materials include at least one monomer of alkyl-acrylate mixed with some elastomeric material. It is worth mentioning that these compositions may also include ethylenically unsaturated co-monomers, or other alkylacrylates, styrene and its derivatives or vinyl chloride. Likewise, the elastomeric material may also be a homopolymer or a copolymer, like polybutadiene, polyisoprene, polyisobutylene, copolymers of butadienestyrene, and butadiene-acrylonitrile polymers. There are various procedures to obtain sheets containing acrylic monomers in their composition. However, the majority requires a stage of polymerization of the monomers carried out at low conversions until obtaining a prepolymer, known as syrup or honey because of its consistency. Later it undergoes a stage of controlled temperature curing, in which the polymerization of the monomers is completed, finally obtaining the desired sheet with the characteristics corresponding to the composition of which it comes from.

It is worth mentioning that there also exist several methods to make the curing of the prepolymers and obtain the sheets, like the curing in molds (also known as "CELL CAST"), curing by rolling and continuous curing, amongst others.

In the case of acrylic compositions with improved resistance to impact, as mentioned above, an elastomeric material is added to the used monomer mix, usually before doing the prepolymerization. However, these elastomeric materials, during the polymerization executed at a low conversion in order to form the prepolymer, become incompatible with the medium and tend to separate themselves. The reason of this incompatibility is that the elastomeric materials have different degrees of density and viscosity than the prepolymer, the consequence is a tendency of the elastomeric materials to separate themselves from the mix, provoking a separation or inversion of phases.

There is an important variety of compositions with high impact resistance, like the ones described in the American Patents Nos. 4085166, 4530973, 5169903 and 5196483. However, the majority of these compositions need to be prepared from a mix of materials, including an important quantity of monomers, under difficult to control operation conditions and using sophisticated equipment (high temperature and pressure reactors). This means said compositions make the production of sheets with a high impact resistance very expensive.

One of the most complete works on acrylic compositions with high impact resistance is the one reported by Kitagawa, et. al., in the American Patent No. 4287317. It describes an acrylic polymer composition resistant to impact. In said patent, a continuous process is used to polymerize the components and form the honey. In the chapter on the state of the art, it is also stated that there are a wide variety of problems when doing mass polymerization of these types of materials, due to the aforementioned problem of separation and inversion of phases.

According to the description of Kitagawa, et. al., when they presented their patent request there was no procedure enabling to produce acrylic prepolymers modified with elastomeric materials with viscosity, which would enable the production of sheets, and at the same time obtain the characteristics of transparency and stability these sheets need. Therefore that patent describes a process to produce a stable polymer from the aforementioned mix of 100 parts by weight of a monomer or a mix of monomers containing from 80% to 100% by weight of methyl methacrylate and 0% to 20 % by weight of an ethylenically unsaturated monomer, which can be copolymerized with methyl methacrylate, which are mixed with 1 to 20 parts by weight of an elastomeric polymer, until forming an homogeneous mix which is prepolymerized until it reaches 5 to 40 % of conversion, through the addition of an appropriate initiator. A final composition will be obtained of 66% to 99% by weight of methyl methacrylate, 0% to 20% by weight of the ethylenically unsaturated monomer, which can be copolymerized with the methyl methacrylate and 0.99% to 16.7% by weight of the elastomeric polymer. This allows in turn to produce a sheet with characteristics of high transparency and resistance to impact.

The procedure to obtain the prepolymer is very important since according to Kitagawa, et. al., the production of the prepolymer requires a strict control of flows and temperatures in two stages of reaction, which greatly increases the cost of operation.

Furthermore, the same patent mentions that the temperature of the prepolymerization reaction must be kept between 90 to 200°C, and states that lowering the temperature of the reaction results in an instability of the phases of the mix. This in turns means that the progress of the reaction won't be satisfactory, which causes a separation of the particles of the elastomeric polymer, and processing problems.

However, the fact of maintaining these strict conditions of flow and temperature control, results in an increase of the operation costs. It also forbids producing the prepolymer in a batch process. This is very inconvenient for applications in which the same equipment is used to obtain different types of sheets.

It is important to mention that the elastomeric polymer most used for reinforcing monomers is polybutadiene, which, like all polymers obtained from dienes, is chemically and thermally very unstable. This means that the transparency of the sheets obtained through polybutadiene mixes may be considerably affected by time. Concerning this point, in one of the examples of the American Patent No. 4287317, it says that the sheets obtained do not loose their transparency after 1000 hours of accelerated degradation. However, the parameters under which the accelerated degradation is made are not stated and, given the ease of degradation of the polybutadiene, it is very difficult to achieve a high stability of the latter, since no mention is made of the addition of a stabilizing agent in the composition. This means it is likely that the conditions of accelerated degradation were not drastic enough to insure proper transparency during the useful life of the sheet.

Considering the above, it has been tried to eliminate the inconveniences of the modified acrylic sheets currently used, by developing a modified acrylic sheet with a high impact resistance. This sheet, apart from resisting impact, would keep its transparency and resistance to impact properties throughout its useful life and would have characteristics suitable for submission to ulterior processes.

It is the purpose of the invention, to provide a procedure for the production of a prepolymer including a dissolved polymer of very high impact resistance, enabling the operation at a low temperature.

Another purpose of the invention is to provide a procedure to produce a prepolymer including a dissolved polymer of very high impact resistance, enabling the operation per batch. This will facilitate the production of prepolymers with different characteristics with the same equipment.

Taking into account the defects of the previous technique, it is the purpose of this invention, to provide a modified acrylic sheet with high impact resistance, which will maintain its transparency during its whole useful life.

It is another purpose of this invention, to provide a modified acrylic sheet with high impact resistance, which maintains its transparency in finished products even after being submitted to ulterior procedures, as thermal procedures like thermoforming, or superficial ones like gluing and/or color application.

It is another purpose of this invention, to provide a modified acrylic sheet with high impact resistance, with a low molecular weight, which provides optimal mechanical and fluid properties to enable its ulterior processing.

### DETAILED DESCRIPTION

The procedure to obtain the used prepolymer for the production of the modified acrylic sheet with high impact resistance of this invention, is divided into a first stage of mixing followed by a stage of prepolymerization.

The mixing stage consists in preparing a mix of monomers containing 1 to 6 parts by weight of a polymer of a dienic monomer with a particle size enabling its dissolution, preferably particles of 1.5 to 3 cm; up to 20 parts of an ethylenically unsaturated monomer copolymerizable with methyl methacrylate; and approximately 70 to 99 parts of an alkyl acrylate or alkyl methacrylate, preferably methyl methacrylate.

The resulting mix of monomers must be shaken until it forms one homogeneous phase in which the polymer of a dienic monomer is dissolved in the other monomers.

Additionally, when starting to mix, a composition of stabilizing agents for ultraviolet light is incorporated. This composition contains Hals stabilizers and stabilizers derived from benzotriazole, which have a synergic effect enabling to obtain a modified acrylic sheet with high impact resistance with no variation in its transmittance after 1000 hours of exposure to accelerated degradation by Xenon ultraviolet light (ASTM G 26-92). In the preferred modality of this invention, 0.1 to 1.5 % by weight with respect to the monomer mix, of the stabilizing agents mix for ultraviolet light is added.

In a preferred modality of the invention, the stabilizing agents for Hals ultraviolet light are selected from bis-(1-Octyloxy-2,2,6,6,tetramethyl-4-piperidine)sebacate; polymero of dimethyl succinate with 4-hidroxy-2,2,6,6,tetramethyl-1-piperidine ethanol; bis(2,2,6,6,-tetramethyl-4-piperidine) sebacate; 1,3,5-triazine-2,4,6-triamino,N,N'''-[1,2-ethanediylbis [[[4,6-bis [butyl(1,2,2,6,6-pentamethyl-4-piperidine)amino]-1,3,5-triazine-2-yl]imino]-3,1 propanediil]]-bis[N',N''-dibutyl - N',N''-bis (1,2,2,6,6-pentamethyl-4-piperidine) ; poly-[[6-[(1,1,3,3,-tetramethyl butyl) amino]-s-triazine -2,4-diyl] [[2,2,6,6-tetramethyl-4-piperide)imino] hexamethylene [(2,2,6,6,-tetramethyl-4-piperide) imino]]; or, mixes of the same; while the stabilizing agents for ultraviolet light derived from benzotriazole are selected preferably from 2-(2',hydroxy-5-methyl-phenyl) benzotriazole; 2-(2H-benzotriazole-2-yl)-4,6-bis(1-methyl-1-phenylethyl)phenol; 2-(5-chloro-2H-benzotriazole-2-yl)-6-(1,1-dimethylethyl)-4-methylphenol; 2-(3',5'-di-ter-butyl-2'-hydroxyphenyl)-5-chlorobenzotriazole; 2-(2H-benzotriazole-2-yl)-4,6-bis(1,1-dimethylpropyl)phenol; or, mixes of the same.

In a specific modality of this invention, the mix of stabilizing agents for ultraviolet light is made of 2-(2',hydroxy-5-methyl-phenyl) benzotriazole y bis-(2,2,6,6-tetramethyl-4-piperidine) sebacate, said mix containing preferably 50% by weight of each one approximately.

In a preferred modality of this invention, the polymer of a dienic monomer is polybutadiene, preferably of the kind with a high cis content and the ethylenically unsaturated monomer is styrene.

Once the polymer coming from a dienic monomer is dissolved, an initiating agent is added in a quantity of 0.01 to 0.05% in weight with respect to the monomer mix, and is brought to a temperature kept between 70 to 95%, approximately, at an atmospheric pressure. In a preferred modality of this invention, the initiating agent is selected from initiators of the peroxyde type and the azo type, preferably between tert-butyle peroxypivalate and azo-bis isobutyronitrile.

The prepolymerization is made until reaching a viscosity of the prepolymer of 18 to 21 seconds in a Ford Cup No 6 at the reaction temperature, after which the prepolymer cools down.

The cold prepolymer of this invention has a final viscosity of 45 to 50 seconds in a Ford Cup No 6 at ambient temperature, with a conversion of 8 to 30% approximately, a particle size of the polymer of a dienic monomer of 0.1 to 1 µm approximately, and a molecular weight of 100,000 to 1,000,000 unified atomic mass units (daltons) with polydispersities of 2.0 to 3.5.

To obtain the desired sheet, a demolding agent is added to the prepolymer, preferably dioctyl sodium sulfosuccinate, in a quantity of 0.003% to 0.021% by weight with respect to the prepolymer , as well as pigments in quantities varying according to the needs of the final destination of the sheet. Finally an initiating agent is added in a quantity of 0.15 % to 2% by weight with respect to the prepolymer.

Once the initiating agent has been added to the prepolymer, the latter is subjected to a curing stage, which can be done with any of the curing procedures found in the state of technique, preferably with the procedure of curing in molds. The curing in molds is done by introducing the prepolymer in a mold, which includes two template glass sheets, perfectly polished and free of any imperfections sealed by a joint made in a polymeric material fit for the thickness of the sheet which is being produced; securing the mold by means of several clamps to stop the prepolymer from exiting the mold, and which also enable to obtain the exact thickness required for the sheet; and finish the polymerization of the prepolymer by applying heat, using a heating mode chosen preferably between vapor, air, water or infrared radiation. The polymeric material used to make the joint of the mold will be selected preferably from polyvinyl chloride, vinyl ethylene acetate and polyolefin.

The sheet obtained after the curing is a modified acrylic sheet with high impact resistance, which presents an IZOD impact (ASTM D256) between 1.0 and 1.6 (pounds-foot)/inch (53,4 to 85,44 J/m), a Gardner impact (ASTM 3029) of 40 to 100 pounds-inch (46, 08 to 115,2 kg-cm), and a transmittance over 88%. More than 50% of the transmittance properties of the sheet are preserved after 1000 hours of exposure to ultraviolet Xenon light, while resistance to impact is lowered to maximum 50% after the accelerated degradation.

This invention may be illustrated more clearly by the following examples.

### EXAMPLES

### Example 1.

In an atmospheric solving tank outfitted with an agitation device with two marine type propellers revolving at 1000 r.p.m., a mix of 81 parts of methyl methacrylate is prepared with 15 parts of styrene monomer and 4 parts of high cys polybutadiene, as well as 0.6 % by weight of a mix of 2-(2',hydroxy-5-methyl-phenyl) benzotriazole and bis-(2,2,6,6-tetramethyl-4-piperidinyl) sebacate in a 1:1 proportion. The mix is agitated during 5 hours at an ambient temperature, after which an homogeneous dissolution is obtained.

The monomer mix is then transferred to an agitated tank reactor of batch processing, at an atmospheric pressure and with temperature control by means of water, in which 0.013% of tert-butyle peroxypivalate is added as an initiator. The temperature is kept at 82°C while the mix is agitated as 300 r.p.m., until a prepolymer with a viscosity at 82°C of 19 seconds in a Ford Cup No 6 is obtained. The prepolymer is then brought to an ambient temperature (20°C). It then has a viscosity of 47 seconds in a Ford Cup No 6, a conversion of 10% and a particle size of the dissolved polybutadiene of 0.1 µm.

Later, 0.3% of weight of the same initiator was added, as well as 0.0045% of dioctyl sodium sulfosuccinate as demolding agent. The prepolymer was submitted to a vacuum and through the method of mold curing a sheet of 3 mm thickness and 244 cm by 122 cm was obtained. The produced sheet didn't have any superficial flaws, it demonstrated high brightness and resistance to impact. The IZOD impact presented by the sheet was 1.2 (pound-foot) /inch(64,08 J/m) and the Gardner impact was 90 pounds-inch (103,68 kg-cm) with a transmittance of 88%. The impact property was kept in 50% of the original impact after being subjected to 1000 hours of ultraviolet Xenon light (ASTM G 26-92). It is worth mentioning that a sheet made of methyl methacrylate as only monomer generally has a resistance to the Gardner impact of 1.6 pounds-inch (1,84 kg-cm).

The material was subjected to tests of functionality by heating the sheet at 180°C during 10 minutes and then thermoforming it at an elevation of 30 cm maintaining the impact and light transmission.

### Example 2.

A mix of 96 parts of methyl methacrylate and 4 parts of polybutadiene is prepared, with a dissolution time of 4 hours. This mix is also transferred to the reactor described in example 1, 0.02% of azobisisobutyronitrile initiator was added and 0.2% of a mix of 2-(2',hydroxy-5-methyl-phenyl)benzotriazole and bis-(2,2,6,6-tetramethyl-4-piperidinyl) sebacate, this mix is subjected to a reaction at 82°C for 45 minutes until reaching a conversion of 10%.

Like in example 1, an initiator and a demolding agent were added to the cold prepolymer, in this case 0.05% in by weight of azobisisobutyronitrile instead of a peroxyde type initiator and 0.0045% of dioctyl sodium sulfosuccinate as demolder. Starting from the prepolymer, a sheet was again produced with the same dimensions as in example 1, also free from superficial flaws. It presented a high brightness and resistance to IZOD impact of 0.52 pounds-foot/inch (27,77 J/m), Gardner impact of 60 pound/inch (69, 12 kg-cm) and light transmission of 80%. The impact property was maintained in 50% of the original impact after 1000 hours of ultraviolet Xenon light exposure (ASTM G 26-92).

The material was submitted to thermoforming under the same conditions as in example 1 and did not present any changes in its impact and light transmission properties after this test.

### Example 3.

A prepolymer was prepared with a styrene monomer only, making it react in an agitated tank reactor for batch processing, with 0.005% by weight of azobisisobutyronitrile as initiating agent, at a temperature of 82°C for 60 minutes. After cooling down, it presented a conversion of 8% and a viscosity of 35 seconds, Ford Cup No. 6.

Furthermore, a second prepolymer was prepared according to the description in example 1. It was prepared for curing using 003% of dioctyl terephthalate as demolder and 1.5% of tert-butyle peroxypivalate. In addition, 5% by weight was added to the prepolymer prepared only with styrene, and a sheet corresponding to the description in example 1 was formed. The produced sheet was free from superficial flaws, had high brightness and resistance to impact. The Gardner impact for that sheet was 65 pound-inch (74,88 kg-cm), while the IZOD impact was 1.0 pound-foot/inch (53,4 J/m) as well as a 50% transmittance. As may be observed, the light transmission of this type of sheet is low because it is requested in some applications like domes, lavatory partitions and luminous advertisements.

### Example 4.

A prepolymer is prepared, ready for curing, according to the description in example 3. However, in this case 3% of a paste (70% TiO2 / 30% of dioctyl terephthalate) is added in order to obtain a white sheet.

The sheet is thermoformed at a temperature of 180°C for 12 minutes in order to obtain a luminous advertisement with an even transmission and diffusion of light over the whole surface. The IZOD impact of the thermoformed luminous advertisement was 0.98 pound-foot/inch (52,33 J/m), while the Gardner impact was 60 pound-inch (69,12 kg-cm). It was observed that the material kept its shine and did not present any flaws when being subjected to heat.

As can be clearly observed in these examples, a consequence of the process of this invention is that a sheet with optimal processing characteristics is obtained. In other words, when a sheet, obtained through the process described in this invention, is later subjected to further processes of deformation by heat, it keeps its transparency and impact resistance characteristics.

It should be pointed out that in example 2, which does not include the ethylenically unsaturated monomer copolymerizable with the monomer of the type of the alkyl acrylates or alkyl methacrylates, the produced sheet, even though it did not meet the desired transmittance characteristics, kept its impact properties after being thermoformed.

In accordance with the above description, we may note that the procedure to create a prepolymer in this invention has been developed to enable the production of modified acrylic sheets with high impact resistance. It will be obvious to any specialist in the matter, that the modalities of the modified acrylic sheet resistant to impact described above are only for illustration purposes and do not limit this invention in any way, since several changes in its detail are possible without drifting away from the objective of the invention. Even when a specific modality of the invention has been illustrated and described, it must be understood that numerous modifications to this invention are possible, as for example different pigments and initiating agents or demolders.

## Claims

1. A procedure for the production of a modified acrylic sheet with high impact resistance of the type where at least one alkyl acrylate or alkyl methacrylate monomer, optionally an ethylenically unsaturated monomer copolymerizable with the alkyl acrylate or alkyl methacrylate monomer and a polymer of a dienic monomer are homogeneously mixed, followed by a mass prepolymerization of the components of the previously obtained monomer mix, through the use of a primary initiating agent so as to form a prepolymer, which is later be subjected to a curing stage by means of traditional procedures in order to produce sheets, in the presence of a second initiating agent **characterised in that** the prepolymerization is made in batches at a temperature of 70 to 95°C, at atmospheric pressure, so as to reduce a separation of the dienic monomer polymer from the rest of the mix.

2. A procedure, according to claim 1, **characterised in that** the mix of monomer includes 70 to 99 parts by weight of alkyl acrylate or alkyl methacrylate; up to 20 parts by weight of the ethylenically unsaturated monomer, copolymerizable with the alkyl acrylates or alkyl methacrylates; and 1 to 6 parts by weight of the polymer of dienic monomer.

3. A procedure, according to claim 2, **characterised in that** the polymer of dienic monomer is polybutadiene.

4. A procedure, according to claim 3, **characterised in that** the polybutadiene is of the type with a high cis content.

5. A procedure, according to claim 2, **characterised in that** the ethylenically unsaturated monomer is styrene.

6. A procedure, according to claim 2, **characterised in that** the monomer of the alkyl acrylates or alkyl methacrylate type is methyl methacrylate.

7. A procedure, according to claim 1, **characterised in that** at the beginning of the mixing stage, a mix of stabilizing agents for ultraviolet light is incorporated, the mix of the stabilizing agents including Hals type stabilizers and derivatives of benzotriazole, in order to improve the transparency of the produced sheets, from the polymer.

8. A procedure, according to claim 7, **characterised in that** the Hals type stabilizing agents for ultraviolet light are selected from bis-(1-actyloxy-2,2,6,6,tetramethyl-4-piperidine)sebacate; polymer of dimethyl succinate with 4-hydroxy-2,2,6,6,tetramethyl-1-piperidine ethanol; bis(2,2,6,6,-tetramethyl-4-piperidine) sebacate; 1,3,5-triazine-2,4,6-triamino,N,N'''-[1,2-ethanediylbis [[[4,6-bis [butyl(1,2,2,6,6-pentamethyl-4-piperidine)amino]-1,3,5-triazine-2-yl]imino]-3,1 propanediyl]]-bis[N',N''-dibutyl-N',N''-bis(1,2,2,6,6-pentamethyl-4-piperidine)-; poly-[[6-[(1,1,3,3,-tetramethyl butyl) amino]-s- triazine -2,4-diyl] [[(2,2,6,6-tetramethyl-4-piperide)imino] hexamethylene [(2,2,6,6,-tetramethyl-4-piperide)imino]]; or, mixes of the same.

9. A procedure, according to claim 8, **characterised in that** because the stabilizing agents for ultraviolet light derived from benzotriazole are selected from 2-(2',hydroxy-5-methyl-phenyl) benzotriazole; 2-(2H-benzotriazole-2-il)-4,6-bis(1-methyl-1-phenylethyl)phenol; 2-(5-chloro-2H-benzotriazole-2-yl)-6-(1,1-dimethylethyl)-4-methylphenol; 2-(3',5'-di-ter-butyl-2'-hydroxyphenyl)-5-chlorobenzotriazole; 2-(2H-benzotriazole-2-yl)-4,6-bis(1,1-dimethylpropyl)phenol; or, mixes of the same.

10. A procedure, according to claim 8, **characterised in that** because the mix of stabilizing agents for ultraviolet light is added in quantity of 0.1 to 1.5% by weight with respect to the monomer mix.

11. A procedure, **according to** claim 10 **characterised in that** the mix of stabilizing agents for ultraviolet light is formed with 2-(2',hydroxy-5-methylphenyl)benzotriazole and bis-(2,2,6,6-tetramethyl-4-piperidinile)sebacate.

12. A procedure, according to claim 11, **characterised in that** the mix contains 50% by weight of each one of the stabilizing agents for ultraviolet light.

13. A procedure, according to claim 12, **characterised in that** the mix of monomer includes 70 to 99 parts by weight of alkyl acrylate or alkyl methacrylate; 20 parts by weight of the ethylenically unsaturated monomer, copolymerizable with the alkyl acrylates or alkyl methacrylates; and approximately 1 to 6 parts by weight of the polymer of dienic monomer.

14. A procedure, according to claim 1, **characterised in that** because the primary initiating agent is added in quantities of 0.01 to 0.05% by weight with respect to the monomer mix.

15. A procedure, according to claim 14, **characterised in that** the primary initiating agent is selected from initiators of the peroxyde and of the azo type.

16. A procedure, according to claim 12, **characterised in that** the primary initiating agent is selected from tert-butyle peroxypivalate and azo-bisisobutyronitrile.

17. A procedure, according to claim 1, **characterised in that** the prepolymerization is done until a viscosity of the polymer of 18 to 21 seconds in Ford Cup No 6 at the reaction temperature is reached.

18. A procedure, according to claim 17, **characterised in that** the cold prepolymer has a final viscosity of 45 to 50 seconds in Ford Cup No 6.

19. A procedure, according to claim 18, **characterised in that** the cold prepolymer has a conversion of 8 to 30%.

20. A procedure, acrylic according to claim 19, **characterised in that** the cold prepolymer has a particle size of the polymer of dienic monomer of 0.1 to 1 µm.

21. A procedure, according to claim 20, **characterised in that** the cold prepolymer has a molecular weight of 100,000 to 1,000,000 unified atomic mass units.

22. A procedure, according to claim 21, **characterised in that** the cold prepolymer has polydispersities of 2.0 to 3.5.

23. A procedure, according to claim 1, **characterised in that** because at least one demolding agent is added to the prepolymer and at least one pigment before the curing stage.

24. A procedure, according to claim 23, **characterised in that** the demolding agent is added in quantities of 0.003% to 0.021% by weight with respect to the prepolymer.

25. A procedure, according to claim 24, **characterised in that** the demolding agent is preferably dioctyl sodium sulfosuccinate.

26. A procedure, according to claim 1, **characterised in that** the second initiating agent is added in quantities of 0.15% to 2% by weight with respect to the prepolymer.

27. A procedure, according to claim 26, **characterised in that** the second initiating agent is selected from peroxyde and azo type initiators.

28. A procedure, according to claim 27, **characterised in that** the curing stage of the prepolymer is done with the procedure of curing in molds.

29. A modified acrylic sheet with high impact resistance produced by mixing 70 to 99 parts by weight of an alkyl acrylate or alkyl methacrylate; up to 20 parts by weight of an ethylenically unsaturated monomer copolymerizable with the alkyl acrylate or alkyl methacrylate; and 1 to 6 parts by weight of a polymer of dienic monomer, wherein, through the curing of a prepolymer produced by a procedure of mass batch prepolymerization, at a temperature of 70 to 95°C and at atmospheric pressure, the sheet has an IZOD impact (ASTM D256) of 1.0 to 1.6 (pound-foot)/inch) (53,4 to 85,44 J/m) ; a Gardner impact (ASTM 3029) of 40 to 100 pound-inch (46,08 to 115,2 kg-cm) and a transmittance of over 88%

30. A modified acrylic sheet according to claim 29, wherein the polymer of dienic monomer is butadiene.

31. A modified acrylic sheet according to claim 29 or 30, **characterised in that** it includes 0.1 to 1.5% by weight of a mix of stabilizing agents for Hals type ultraviolet light and derivatives of benzotriazole, so that the transmittance properties of the sheet are kept after a 1000 hours exposure to Xenon ultraviolet light.

32. A modified acrylic sheet according to claim 31, **characterised in that** the stabilizing agents for the Hals type ultraviolet light are selected from bis-(1-actyloxy-2,2,6,6,tetramethyl-4-piperidine)sebacate; polymer of dimethyl succinate with 4-hydroxy-2,2,6,6,tetramethyl-1-piperidine ethanol; bis(2,2,6,6,-tetramethyl-4-piperidine) sebacate; 1,3,5-triazine-2,4,6-triamino,N,N'''-[1,2-ethanediylbis [[[4,6-bis [butyl(1,2,2,6,6-pentamethyl-4-piperidine)amino]-1,3,5-triazine-2-yl]imino]-3,1 propanediyl]]-bis[N',N''-dibutyl-N',N''-bis(1,2,2,6,6-pentamethyl-4-piperidine)-poly-6-[(1,1,3,3,-tetramethyl butyl)amino]-s-triazine -2,4-diyl] [[(2,2,6,6-tetramethyl-4-piperide)imino] hexamethylene [(2,2,6,6,-tetramethyl-4-piperide) imino]]; or, mixes of the same.

33. A modified acrylic sheet according to claim 32, **characterised in that** the stabilizing agents for ultraviolet light derived from benzotriazole are selected from 2-(2',hydroxy-5-methyl-phenyl) benzotriazole; 2-(2H-benzotriazole-2-yl)-4,6-bis(1-methyl-1-phenylethyl)phenol; 2-(5-chloro-2H-benzotriazole-2-yl) -6-(1,1-dimethylethyl)-4-methylphenol; 2-(3',5'-di-ter-butyl-2'-hydroxyphenyl)-5-chlorobenzotriazole; 2-(2H-benzotriazole-2-yl)-4, 6-bis(1,1-dimethylpropyl)phenol; or, mixes of the same.

34. A modified acrylic sheet with high impact resistance, according to claim 32, **characterised in that** the mix of stabilizing agents for ultraviolet light is made of 2-(2',hydroxy-5-methyl-phenyl)benzotriazole and bis-(2,2,6,6-tetramethyl-4-piperidinyl)sebacate.

35. A modified acrylic sheet according to claim 34, **characterised in that** the mix of stabilizing agents includes 50% by weight of each one of the stabilizing agents for ultraviolet light.

36. A modified acrylic sheet according to claim 32, **characterised in that** the transmittance properties of the sheet are reduced by at most 50% after a 1000 hours exposure to Xenon ultraviolet light.

37. A modified acrylic sheet according to claim 32, **characterised in that** the sheet, after being subjected to a heat deformation process, keeps its transparency and impact resistance properties.

## Patentansprüche

1. Verfahren zur Herstellung eines modifizierten Acryl-Flachmaterials mit hoher Schlagzähigkeit des Typs, bei dem mindestens ein Alkyl-acrylat- oder Alkyl-methacrylat-Monomer, gewünschtenfalls ein ethylenisch ungesättigtes Monomer, das mit dem Alkyl-acrylat- oder Alkyl-methacrylat-Monomer copolymerisierbar ist, und ein Polymer eines Dien-Monomers homogen gemischt werden, gefolgt von einer Substanz-Präpolymerisation der Komponenten des vorher erhaltenen Monomer-Gemisches durch die Verwendung eines primären Initüerungsmittels, um ein Präpolymer zu bilden, das später mittels üblicher Verfahren, in Anwesenheit eines zweiten Initiierungsmittels, einer Aushärtungsstufe unterzogen wird, um Flachmaterialien herzustellen, **dadurch gekennzeichnet, daß** die Präpolyrnerisation in Chargen bei einer Temperatur von 70 bis 95°C bei Atmosphärendruck durchgeführt wird, um eine Abtrennung des Polymers des Dien-Monomers vom Rest des Gemisches zu verringern.

2. Verfahren nach Anspruch 1, **dadurch gekennzeichnet, daß** das Monomer-Gemisch 70 bis 99 Gew.-Teile Alkyl-acrylat oder Alkyl-methacrylat; bis zu 20 Gew.-Teile des ethylenisch ungesättigten Monomers, das mit den Alkyl-acrylaten oder Alkyl-methacrylaten copolymerisierbar ist; und 1 bis 6 Gew.-Teile des Polymers des Dien-Monomers enthält.

3. Verfahren nach Anspruch 2, **dadurch gekennzeichnet, daß** das Polymer des Dien-Monomers Polybutadien ist.

4. Verfahren nach Anspruch 3, **dadurch gekennzeichnet, daß** das Polybutadien vom Typ mit einem hohen cis-Gehalt ist.

5. Verfahren nach Anspruch 2, **dadurch gekennzeichnet, daß** das ethylenisch ungesättigte Monomer Styrol ist.

6. Verfahren nach Anspruch 2, **dadurch gekennzeichnet, daß** das Monomer vom Alkyl-acrylat- oder Alkyl-methacrylat-Typ Methyl-methacrylat ist.

7. Verfahren nach Anspruch 1, **dadurch gekennzeichnet, daß** zu Beginn der Misch-Stufe ein Gemisch von Stabilisierungsmitteln für Ultraviolettlicht inkorporiert wird, wobei das Gemisch der Stabilisierungsmittel Stabilisatoren vom Hals-Typ und Benzotriazol-Derivate umfaßt, um die Transparenz der aus dem Polymer hergestellten Flachmaterialien zu verbessern.

8. Verfahren nach Anspruch 7, **dadurch gekennzeichnet, daß** die Stabilisierungsmittel vom Hals-Typ für Ultraviolettlicht ausgewählt werden aus Bis-(1-octyloxy-2,2,6,6-tetramethyl-4-piperidin)sebacat; Polymeren von Dimethyl-succinat mit 4-Hydroxy-2,2,6,6-tetramethyl-1-piperidin-ethanol; Bis(2,2,6,6-tetramethyl-4-piperidin)sebacat; 1,3,5-Triazin-2.4,6-triamino-N,N"'-[1,2-ethandiylbis[[[4,6-bis[butyl(1,2,2,6,6-pentamethyl-4-piperidin)amino]-1,3,5-triazin-2-yl]imino]-3,1-propandiyl]]-bis(N',N".dibutyl-N',N"-bis(1,2,2,6,6-pentamethyl-4-piperidin); Poly-[[6-[(1,1.3,3-tetra methyl-butyl)amino]-s-triazin-2,4rdiyl][[(2,2,6,6-tetramethyl-4-piperidin)imino]hexamethylen[(2,2,6,6-tetramethyl-4-piperidin)imino]]; oder Gemischen derselben.

9. Verfahren nach Anspruch 8, **dadurch gekennzeichnet, daß** die Stabilisierungsmittel für Ultraviolettlicht, die von Benzotriazol abgeleitet sind, ausgewählt werden aus 2(2'-Hydroxy-5-methyl-phenyl)benzotriazol; 2-(2H-Benzotriazol-2-yl)-4,6-bis(1-methyl-1-phenylethyl)phenol; 2-(5-Chlor-2N-benzotriazol-2-yl)-6-(1.1-dimethylethyl)-4-methylphenol; 2-(3',5'-Di-tert-butyl-2'-hydroxyphenyl)-5-Chlorbenzotriazol; 2-(2H-Benzotriazol-2-yl)-4,6-bis(1,1-dimethylpropyl)phenol; oder Gemischen derselben,

10. Verfahren nach Anspruch 8, **dadurch gekennzeichnet, daß** das Gemisch von Stabilisierungsmitteln für Ultraviolettlicht in einer Menge von 0,1 bis 1,5 Gew,-%, bezogen auf das Monomer-Gemisch, zugegeben wird.

11. Verfahren nach Anspruch 10, **dadurch gekennzeichnet, daß** das Gemisch von Stabilisierungsmitteln für Ultraviolettlicht mit 2-(2'-Hydroxy-5-methylphenyl)benzotriazol und Bis-(2,2,6,6-tetramethyl-4-piperidinyl)sebacat gebildet wird.

12. Verfahren nach Anspruch 11, **dadurch gekennzeichnet, daß** das Gemisch 50 Gew.-% jedes der Stabilisierungsmittel für Ultraviolettlicht enthält.

13. Verfahren nach Anspruch 12, **dadurch gekennzeichnet, daß** das MonomerenGemisch 70 bis 99 Gew.-Teile Alkyl-acrylat oder Acryl-methacrylat: 20 Gew.-Teile des ethylenisch ungesättigten Monomers, das mit den Alkyl-acrylaten oder Alkyl-methacrylaten copolymerisierbar ist; und näherungsweise 1 bis 6 Gew.-Teile des Polymers des Dien-Monomers enthält.

14. Verfahren nach Anspruch 1, **dadurch gekennzeichnet, daß** das primäre Initiierungsmittel in Mengen von 0,01 bis 0,05 Gew.-%, bezogen auf das Monomer-Gemisch, zugegeben wird.

15. Verfahren nach Anspruch 14, **dadurch gekennzeichnet, daß** das primäre Initiierungsmittel ausgewählt wird aus Initiatoren des Peroxid- und des Azo-Typs.

16. Verfahren nach Anspruch 12, **dadurch gekennzeichnet, daß** das primäre Initiierungsmittel ausgewählt wird aus tert.-Butyl-peroxypivalat und Azo-bis-isobutyronitril.

17. Verfahren nach Anspruch 1, **dadurch gekennzeichnet, daß** die Präpolymerisetion durchgeführt wird bis eine Viskosität des Polymers von 18 bis 21 Sekunden im Ford-Becher Nr. 6 bei der Reaktionstemperatur erreicht wird.

18. Verfahren nach Anspruch 17, **dadurch gekennzeichnet, daß** das kalte Präpolymer eine Endviskosität von 45 bis 50 Sekunden im Ford-Becher Nr. 6 hat.

19. Verfahren nach Anspruch 18, **dadurch gekennzeichnet, daß** das kalte Präpolymer eine Umsetzung von 8 bis 30 % hat.

20. Verfahren nach Anspruch 19, **dadurch gekennzeichnet, daß** das kalte Präpolymer eine Teilchengröße des Polymers des Dien-Monomers von 0,1 bis 1 µm hat.

21. Verfahren nach Anspruch 20, **dadurch gekennzeichnet, daß** das kalte Präpolymer ein Molekulargewicht von 100.000 bis 1.000.000 atomaren Masseneinheiten hat.

22. Verfahren nach Anspruch 21, **dadurch gekennzeichnet, daß** das kalte Präpolymer Polydispersitäten von 2,0 bis 3,5 hat.

23. Verfahren nach Anspruch 1, **dadurch gekennzeichnet, daß** mindestens ein Entformungsmittel und mindestens ein Pigment zu dem Präpolymer vor der Aushärtungsstufe zugegeben wird.

24. Verfahren nach Anspruch 23, **dadurch gekennzeichnet, daß** das Entformungsmittel in Mengen von 0,003 Gew.-% bis 0,021 Gew.-%, bezogen auf das Präpolymer, zugegeben wird.

25. Verfahren nach Anspruch 24. **dadurch gekennzeichnet, daß** das Entformungsmittel bevorzugt Dioctyl-natrium-sulfosuccinat ist.

26. Verfahren nach Anspruch 1, **dadurch gekennzeichnet, daß** das zweite Initiierungsmittel in Mengen von 0,15 Gew.-% bis 2 Gew.-%, bezogen auf das Präpolymer, zugegeben wird.

27. Verfahren nach Anspruch 26, **dadurch gekennzeichnet, daß** das zweite Initiierungsmittel ausgewählt wird aus Initiatoren vom Peroxid- und Azo-Typ.

28. Verfahren nach Anspruch 27, **dadurch gekennzeichnet, daß** die Aushärtungsstufe des Präpolymers mit dem Verfahren des Aushärtens in Formen durchgeführt wird.

29. Modifiziertes Acryl-Flachmaterial mit hoher Schlagzähigkeit, hergestellt durch Mischen von 70 bis 99 Gew.-Teilen eines Alkyl-acrylats oder Alkyl-methacrylats; bis zu 20 Gew.-Teilen eines ethylenisch ungesättigten Monomers, das mit dem Alkyl-acrylat oder Alkyl-methacrylat copolymerisierbar ist; und 1 bis 6 Gew.-Teilen eines Polymers eines Dien-Monomers, wobei durch das Aushärten eines Präpolymers, das durch ein Verfahren einer chargenweisen Substanz-Präpolymerisation bei einer Temperatur von 70 bis 95°C und bei Atmosphärendruck hergestellt wurde, das Flachmaterial eine IZOD-Kerbschlagzähigkeit (ASTM D256) von 1,0 bis 1,6 (Pound-Fuß)/lnch) (53,4 bis 85.44 J/m); eine Gardner-Schlagzähigkeit (ASTM 3029) von 40 bis 100 Pound-Inch (46,08 bis 115,2 kg-cm) und eine Durchlässigkeit von über 88 % hat.

30. Modifiziertes Acryl-Flachmaterial nach Anspruch 29, bei dem das Polymer des Dien-Monomers Butadien ist.

31. Modifiziertes Acryl-Flachmaterial nach Anspruch 29 oder 30, **dadurch gekennzeichnet, daß** es 0,1 bis 1,5 Gew.-% eines Gemisches von Stabilisierungsmitteln vom Hals-Typ für Ultraviolettlicht und von Benzotriazol-Derivaten enthält, so daß die Durchlässigkeitseigenschaften des Flachmaterials beibehalten werden, nachdem es 1.000 Stunden Xenon-Ultraviolettlicht ausgesetzt wurde.

32. Modifiziertes Acryl-Flachmaterial nach Anspruch 31, **dadurch gekennzeichnet, daß** die Stabilisierungsmittel für Ultraviolettlicht vom Hals-Typ ausgewählt sind aus Bis-(1-octyloxy-2,2,6,6-tetramethyl-4-piperidin)sebacat; Polymer von Dimethyl-succinat mit 4-Hydroxy-2,2.6,6-tetramethyl-1-piperidin-ethanol; Bis(2,2,6,6-tetramethyl-4-piperidin)sebacat; 1,3,5-Triazin-2,4,6-triamino-N,N"'[1,2-ethandiylbis[[4,6-bis[butyl(1,2,2,6,6-pentamethyl-4-piperidin)amino]-1,3,triazin-2-yl]imino]-3,1-propandiyl]]-bis[N',N"-dibutyl-N',N"-bis(1,2,2,6,-pentamethyl-4-piperidin); Poly-[[6-[(1,1,3,3-tetramethyl-butyl)amino]-s-triazin-2,4-diyl][[(2,2,6,6-tetramethyl-4-piperidin)imino]hexamethylen[(2,2,6,6-tetramethyl-4-piperidin)imino]]; oder Gemischen derselben.

33. Modifiziertes Acryl-Flachmaterial nach Anspruch 32, **dadurch gekennzeichnet, daß** die Stabilisierungsmittel für Ultraviolettlicht, die von Benzotriazol abgeleitet sind, ausgewählt sind aus 2-(2'-Hydroxy-5-methyl-phenyl)benzotriazol; 2-(2H-Benzotriazol-2-yl)-4,6-bis(1-methyl-1-phenylethyl)phenol; 2-(5-Chlor-2H-benzotriazol-2-yl)-6-(1,1-dimethylethyl)-4-methylphenol; 2-(3',5'-Di-tert-butyl-2'-hydroxyphenyl)-5-chlorbenzotriazol; 2-(2H-Benzotriazol-2-yl)-4,6-bis(1,1-dimethylpropyl)phenol; oder Gemischen derselben.

34. Modifiziertes Acryl-Flachmaterial mit hoher Schlagzähigkeit nach Anspruch 32. **dadurch gekennzeichnet, daß** das Gemisch von Stabilisierungsmitteln für Ultraviolettlicht aus 2-(2'-Hydroxy-5-methyl-phenyl)benzotriazol und 8is-i2,2,6,6-tetramethyl-4-piporidinyl)sebacat hergestellt ist.

35. Modifiziertes Acryl-Flachmaterial nach Anspruch 34, **dadurch gekennzeichnet, daß** das Gemisch von Stabilisierungsmitteln 50 Gew.-% jedes der Stabilisierungsmittel für Ultraviolettlicht enthält.

36. Modifiziertes Acryl-Flachmaterial nach Anspruch 32, **dadurch gekennzeichnet, daß** die Durchlässigkeitseigenschaften des Flachmaterials, nachdem es 1.000 Stunden Xenon-Ultraviolettlicht ausgesetzt wurde, um höchstens 50 % verringert werden.

37. Modifiziertes Acryl-Flachmaterial nach Anspruch 32, **dadurch gekennzeichnet, daß** das Flachmaterial, nachdem es einem Wärme-Verformungsprozeß unterzogen wurde, seine Durchlässigkeits- und Schlagzähigkeits-Eigenschaften beibehält.

## Revendications

1. Procédure de production d'une feuille acrylique modifiée ayant une haute résistance aux chocs du type où au moins un monomère acrylate d'alkyle ou méthacrylate d'alkyle, facultativement un monomère éthyléniquement insaturé copolymérisable avec le monomère acrylate d'alkyle ou méthacrylate d'alkyle et un polymère d'un monomère diénique sont mélangés de manière homogène, suivi par une pré-polymérisation en masse des composants du mélange de monomères obtenu précédemment, par l'utilisation d'un agent d'initiation primaire, de façon à former un prépolymère, qui est soumis plus tard à une étape de durcissement au moyen des procédures traditionnelles afin de produire des feuilles, en présence d'un second agent d'initiation, **caractérisée en ce que** la pré-polymérisation est effectuée en lots à une température de 70 à 95°C, à pression atmosphérique, de façon à réduire une séparation du polymère de monomère diénique du reste du mélange.

2. Procédure selon la revendication 1, **caractérisée en ce que** le mélange , de monomères comprend 70 à 99 parties en poids d'acrylate d'alkyle ou de méthacrylate d'alkyle ; jusqu'à 20 parties en poids du monomère éthyléniquement insaturé, copolymérisable avec les acrylates d'alkyle ou méthacrylates d'alkyle ; et 1 à 6 parties en poids du polymère du monomère diénique.

3. Procédure selon la revendication 2, **caractérisée en ce que** le polymère du monomère diénique est le polybutadiène,

4. Procédure selon la revendication 3, **caractérisée en ce que** le polybutadiène est du type ayant une haute teneur en cis.

5. Procédure selon la revendication 2, **caractérisée en ce que** le monomère éthyléniquement insaturé est le styrène.

6. Procédure selon la revendication 2, **caractérisée en ce que** le monomère du type acrylate d'alkyle ou méthacrylate d'alkyle est le méthacrylate de méthyle.

7. Procédure selon la revendication 1, **caractérisée en ce qu'**au commencement de l'étape de mélange, un mélange d'agents stabilisants contre la lumière ultraviolette est incorporé, le mélange des agents stabilisants comprenant des stabilisateurs de type Hals et des dérivés de benzotriazole, afin d'améliorer la transparence des feuilles produites à partir du polymère.

8. Procédure selon la revendication 7, **caractérisée en ce que** les agents stabilisants de type Hals contre la lumière ultraviolette sont choisis parmi le bis-(1-actyloxy-2,2,6,6-tétraméthyl-4-pipéridine)sébacate ; un polymère de succinate de diméthyle avec du 4-hydroxy-2,2,6,6-tétraméthyl-1-pipéridine éthanol ; du bis(2,2,6,6-tétratnéthyl-4-pipéridine)sébacate ; de la 1,3,5-triazine-2,4,6-trîaniino,N,N"'-(1,2-éthaneylbis[[[4,6-bis[butyk(1,2,2,6,6-pentaméthyl-4-pipéridine)amino)-1,3,5-triazine-2-yl]imino]-3,1-propanediyl]]-bis(N',N"-dibutyl-N',N"-bis(1,2,2,6,6-pentaméthyl-4-pipéridine); du poly-[(6-[(1,1,3,3-tétraméthylbutyl)amino]-s-triazine-2,4-diyl][[(2,2,6,6-tétraméthyi-4-pipéride)imino)hexaméthylène[(2,2,6,6-tétraméthyl-4-pipéride)imino)]; ou des mélanges de ceux-ci.

9. Procédure selon la revendication 8, **caractérisée en ce que** les agents stabilisants contre la lumière ultraviolette dérivés de benzotriazole sont choisis parmi le 2-(2'-hydroxy-5-méthyl-phé,nyl)benzotriazole ; le 2-(2H-benzotriazole-2-yl)-4,6-bis(l-méthyl-l-phényléthyl)phénol; le 2-(5-chloro-2H-benzotriazole-2-yl)-6-(1,1-diméthyléthyl)-4-méthylphénol; le 2-(3',5'-di-tert-butyl-2'-hydioxyphényl)-5-chlorobenzotriazole; le 2-(2H-benzotriazole-2-yl)-4,6-bis(1,1-ditnéthylpropyl)phénol; ou des mélanges de ceux-ci.

10. Procédure selon la revendication 8, **caractérisée en ce que** le mélange des agents stabilisants contre la lumière ultraviolette est ajouté en une quantité de 0,1 à 1,5 % en poids par rapport au mélange de monomères.

11. Procédure selon la revendication 10, **caractérisée en ce que** le mélange des agents stabilisants contre la lumière ultraviolette est formé avec du 2-(2'-hydroxy-5-méthyl-phényl)benzotriazole et du bis-(2,2,6,6-tétraméthyl-4-pipéridinile)sébacate.

12. Procédure selon la revendication 11, **caractérisée en ce que** le mélange contient 50 % en poids de chacun des agents stabilisants contre la lumière ultraviolette.

13. Procédure selon la revendication 12, **caractérisée en ce que** le mélange de monomères comprend 70 à 99 parties en poids d'acrylate d'alkyle et de méthacrylate d'alkyle; 20 parties en poids du monomère éthyléniquemem insaturé, copolymérisable avec les acrylates d'alkyle ou méthacrylates d'alkyle; et approximativement 1 à 6 parties en poids du polymère de monomère diénique.

14. Procédure selon la revendication 1, **caractérisée en ce que** l'agent d'initiation primaire est ajouté en des quantités de 0,01 à 0,05 % en poids par rapport au mélange de monomères.

15. Procédure selon la revendication 14, **caractérisée en ce que** l'agent d'initiation primaire est choisi parmi les initiateurs du type peroxyde et du type azoïque.

16. Procédure selon la revendication 12, **caractérisée en ce que** l'agent d'initiation primaire est choisi parmi le peroxypivalate de tert-butyle et l'azo-bis-isobutyronitrile.

17. Procédure selon la revendication 1, **caractérisée en ce que** la prépolymérisation est effectuée jusqu'à ce qu'une viscosité du polymère de 18 à 21 secondes dans une coupe de Ford n° 6 à la température de réaction soit atteinte.

18. Procédure selon la revendication 17, **caractérisée en ce que** le prépolymère froid a une viscosité finale de 45 à 50 secondes dans une coupe de Ford n° 6.

19. Procédure selon la revendication 18, **caractérisée en ce que** le prépolymère froid a une conversion de 8 à 30 %.

20. Procédure selon la revendication 19, **caractérisée en ce que** le prépolymère froid a une taille de particule de polymère de monomère diénique de 0,1 à 1 µm.

21. Procédure selon la revendication 20, **caractérisée en ce que** le prépolymère froid a une masse moléculaire de 100 000 à 1 000 000 d'unités de masse atomique unifiées.

22. Procédure selon la revendication 21, **caractérisée en ce que** le prépolymère froid a des polydispersités de 2,0 à 3,5.

23. Procédure selon la revendication 1, **caractérisée en ce qu'**au moins un agent de démoulage est ajouté au prépolymère et qu'au moins un pigment est ajouté avant l'étape de durcissement.

24. Procédure selon la revendication 23, **caractérisée en ce que** l'agent de démoulage est ajouté en des quantités de 0,003 % à 0,021 % en poids par rapport au prépolymère.

25. Procédure selon la revendication 24, **caractérisée en ce que** l'agent de démoulage est de préférence du sulfosuccinate de dioctyl sodium.

26. Procédure selon la revendication 1, **caractérisée en ce que** le second agent d'initiation est ajouté en des quantités de 0,15 % à 2 % en poids par rapport au prépolymère.

27. Procédure selon la revendication 26, **caractérisée en ce que** le second agent d'initiation est choisi parmi les initiateurs de type peroxyde et azoique.

28. Procédure selon la revendication 27, **caractérisée en ce que** l'étape de durcissement du prépolymère est effectuée avec la procédure de durcissement dans des moules.

29. Feuille acrylique modifiée ayant une haute résistance aux chocs produite en mélangeant 70 à 99 parties en poids d'un acrylate d'alkyle ou d'un méthacrylate d'alkyle ; jusqu'à 20 parties en poids d'un monomère éthyléniquement insaturé copolymérisable avec l'acrylate d'alkyle ou le méthacrylate d'alkyle ; et 1 à 6 parties en poids d'un polymère d'un monomère diénique, dans laquelle, par le durcissement d'un prépolymère produit par une procédure de prépolymérisation discontinue en masse, à une température de 70 à 95°C et à pression atmosphérique, la feuille a une résistance aux chocs selon IZOD (norme ASTM D256) de 1,0 à 1,6 ((livre-pied)/pouce) (53,4 à 85,44 J/m) ; une résistance aux chocs selon Gardner (norme ASTM 3029) de 40 à 100 livres-pouce (46,08 à 115,2 kg-cm) et une transmittance supérieure à 88 %.

30. Feuille acrylique modifiée selon la revendication 29, dans laquelle le polymère de monomère diénique est du butadiène.

31. Feuille acrylique modifiée selon la revendication 29 ou 30, **caractérisée en ce qu'**elle comprend 0,1 à 1,5 % en poids d'un mélange d'agents stabilisants contre la lumière ultraviolette de type Hals et des dérivés de benzotriazole, de sorte que les propriétés de transmittance de la feuille sont maintenues après une exposition de 1 000 heures à une lumière ultraviolette au xénon.

32. Feuille acrylique modifiée selon la revendication 31, **caractérisée en ce que** les agents stabilisants contre la lumière ultraviolette de type Hats sont choisis parmi le bis-(1-actyloxy-2,2,6,6-tétraméthyl-4-pipéridine)sébacate; un polymère de succinate de diméthyle avec du 4-hydroxy-2,2,6,6-tétraméthyl-1-pipéridine éthanol ; du bis(2,2,6,6-tétraméthyl-4-pipéridine)sébacate; de la 1,3,5-triazine-2,4,6-triamino,N,N'"-(1,2-éthanediylbis[[[4,6-bis[butyl(1,2,2,6-pentaméthyl-4-pipéridine)amino]-1,3,5-triazine-2-yl]imino]-3,1-propanediyl]]-bis(N',N"-dibutyl-N',N"-bis(1,2,2,6,6-pentaméthyl-4-pipéridine); du poly-[(6-[(1,1,3,3-tétraméthylbutyl)amino]-s-triazine-2,4-diyl][[(2,2,6,6-tétraméthyl-4-pipéride)imido)hexaméthylène[(2,2,6,6-tétraméthyl-4-pipéride)imino)] ; ou des mélanges de ceux-ci.

33. Feuille acrylique modifiée selon la revendication 32, **caractérisée en ce que** les agents stabilisants contre la lumière ultraviolette dérivés de benzotriazole sont choisis parmi le 2-(2'-hydroxy-5-méthyl-phényl)benzotriazole ; le 2-(2H-benzotriazole-2-yl)-4,6-bis(1-méthyl-1-phényléthyl)phénol; le 2-[5-chloro-2H-benzotnazole-2-yl)-6-(1,1-diméthyléthyl)-4-méthylphénol; le 2-(3',5'-di-tert-butyl-2'-hydroxyphényl)-5-chlorobenzotriazole ; le 2-(2H-benzotriazole-2-yl)-4,6-bis(1,1-diméthylpropyl)phénol ; ou des mélanges de ceux-ci.

34. Feuille acrylique modifiée ayant une haute résistance aux chocs selon la revendication 32, **caractérisée en ce que** le mélange d'agents stabilisants contre la lumière ultraviolette est constitué de 2-(2'-hydroxy-5-methyl-phényl) benzotriazole et de bis-(2,2,6,6-tétraméthyl-4-pipéridinyl)sébacate.

35. Feuille acrylique modifiée selon la revendication 34, **caractérisée en ce que** le mélange des agents stabilisants comprend 50 % en poids de chacun des agents stabilisants contre la lumière ultraviolette.

36. Feuille acrylique modifiée selon la revendication 32, **caractérisée en ce que** les propriétés de transmittance de la feuille sont réduites d'au plus 50 % après une exposition de 1000 heures à une lumière ultraviolette au xénon.

37. Feuille acrylique modifiée selon la revendication 32, **caractérisée en ce que** la feuille, après avoir été soumise à un procédé de déformation à la chaleur, maintient ses propriétés de transparence et de résistance aux chocs.
